# EUROPEAN PATENT SPECIFICATION

(11) **EP 2 899 606 B1**
(45) Date of publication and mention of the grant of the patent: **09.12.2020**
(21) Application number: 13839089.3
(22) Date of filing: 17.09.2013
(51) Int. Cl.: G05F 1/67, H02J 1/12, H02J 1/10

(54) **POWER CONDITIONER, AND METHOD FOR CONTROLLING SAME**
INVERTER UND STEUERUNGSVERFAHREN DAFÜR
CONDITIONNEUR DE PUISSANCE ET PROCÉDÉ POUR LE COMMANDER

(30) Priority: 20.09.2012 JP 2012207089
(43) Date of publication of application: 29.07.2015
(73) Proprietor: Kyocera Corporation, Kyoto-shi Kyoto 612-8501 (JP)
(72) Inventor: BABA, Masahiro, Kyoto-shi Kyoto 612-8501 (JP)
(74) Representative: SSM Sandmair
(86) International application number: PCT/JP2013/005488
(87) International publication number: WO 2014/045563

(56) References cited:
- EP-A2- 1 024 575
- WO-A1-2009/142698
- WO-A1-2012/090242
- JP-A- 2011 145 849
- JP-A- 2012 010 531
- JP-A- 2012 137 830
- JP-A- 2012 181 575
- US-A1- 2010 301 797
- US-A1- 2012 091 810
- US-A1- 2012 153 724

## Description

### CROSS REFERENCE TO RELATED APPLICATION

This application claims priority to Japanese Patent Application No. 2012-207089 filed on September 20, 2012.

### TECHNICAL FIELD

The present invention relates to a power conditioner having a plurality of DC-to-DC converters, and a method of controlling the power conditioner.

### BACKGROUND

A conventional solar power generation system connected to a power grid disconnects from the power grid and autonomously performs solar power generation, when power fails in the power grid. For example, Patent Literature (PTL) 1 proposes an inverter that, upon a power failure of a power grid, switches from a current control mode to a voltage control mode without an interruption of power to a load.

### CITATION LIST

### Patent Literatures

PTL 1: JP H8-66048 A

An increasingly predominant installation form of solar cells in recent years is a multistring structure made up of a plurality of strings that differ in the number of series-connected modules according to roof shape or area. The technique described in PTL 1 is effective for a single string, with no other option. In the multistring structure, however, controlling all strings in the same voltage control mode during autonomous operation leads to a situation where a maximum power point is exceeded by load-dependent voltage control. This makes it difficult to optimize power generated by the plurality of strings.

In view of such circumstances, the present invention has an object of providing a power conditioner that enables efficient and stable use of generated power through mixed use of a maximum power point tracking (MPPT) control mode and a voltage control mode for a plurality of strings according to the power consumption of a load, and a method of controlling the power conditioner.

### SUMMARY

To achieve the object stated above, a power conditioner according to the present invention is a power conditioner including: a plurality of DC-to-DC converters that convert voltages of respective DC input power sources; and a power converter connected to the plurality of DC-to-DC converters, wherein during autonomous operation in which the power conditioner is disconnected from a power grid and allowed to independently supply power, each of the DC-to-DC converters individually switches between a constant DC link (intermediate link) voltage mode in which an output voltage of the DC-to-DC converter is controlled at a target voltage and an MPPT mode in which control is performed to maximize output power of a corresponding DC input power source, according to a change of an input voltage of the power converter.

In the power conditioner according to the present invention, each of the DC-to-DC converters switches to the MPPT mode in the case where the input voltage of the power converter decreases to less than a first threshold, and switches to the constant DC link voltage mode in the case where the input voltage of the power converter increases to greater than or equal to a second threshold.

one embodiment, the first threshold is different for each of the DC-to-DC converters.

In one embodiment, the first threshold is common to the DC-to-DC converters, and a time from when the input voltage of the power converter decreases to less than the first threshold to when the switching to the MPPT mode is performed is different for each of the DC-to-DC converters.

In the power conditioner according to the present invention, the target voltage in the constant DC link voltage mode is different for each of the DC-to-DC converters.

In the power conditioner according to the present invention, the power converter includes a bidirectional converter.

To achieve the object stated above, a method of controlling a power conditioner according to the present invention is a method of controlling a power conditioner that includes: a plurality of DC-to-DC converters that convert voltages of respective DC input power sources; and a power converter connected to the plurality of DC-to-DC converters, the method including a step of, during autonomous operation in which the power conditioner is disconnected from a power grid and allowed to independently supply power, switching each of the DC-to-DC converters between a constant DC link voltage mode in which an output voltage of the DC-to-DC converter is controlled at a target voltage and an MPPT mode in which control is performed to maximize output power of a corresponding DC input power source, according to a change of an input voltage of the power converter. According to the present invention, the target voltage in the constant DC link voltage mode is different for each of the DC-to-DC converters

According to the present invention, during autonomous operation, control is performed with a mixture of a DC-to-DC converter operating in the MPPT mode and a DC-to-DC converter operating in the voltage control mode according to the power consumption of a load. This enables efficient and stable use of generated power. Moreover, by autonomous operation of a power conditioner having a plurality of input power sources, a load with high power consumption can be operated as compared with the case where conventional control is performed.

### BRIEF DESCRIPTION OF THE DRAWINGS

The present invention will be further described below with reference to the accompanying drawings, wherein:
FIG. 1 is a block diagram illustrating a first configuration example of a power conditioner according to an embodiment of the present invention;
FIG. 2 is a block diagram illustrating a second configuration example of the power conditioner according to the embodiment of the present invention;
FIG. 3 is a circuit diagram illustrating DC-to-DC converters in the power conditioner according to the embodiment of the present invention;
FIG. 4 is a block diagram illustrating the functions of a controller in the power conditioner according to the embodiment of the present invention;
FIG. 5 is a flowchart illustrating the operation of a duty ratio control unit in the power conditioner according to the embodiment of the present invention;
FIG. 6 is a diagram illustrating a control example with regard to one DC-to-DC converter in the power conditioner according to the embodiment of the present invention;
FIG. 7 is a diagram illustrating a first control example of the power conditioner according to the embodiment of the present invention;
FIG. 8 is a diagram illustrating a second control example of the power conditioner according to the embodiment of the present invention;
FIG. 9 is a diagram illustrating a third control example of the power conditioner according to the embodiment of the present invention; and
FIG. 10 is a diagram illustrating the power generation of each DC input power source of the power conditioner according to the embodiment of the present invention.

### DETAILED DESCRIPTION

The following describes an embodiment of the present invention in detail, with reference to drawings.

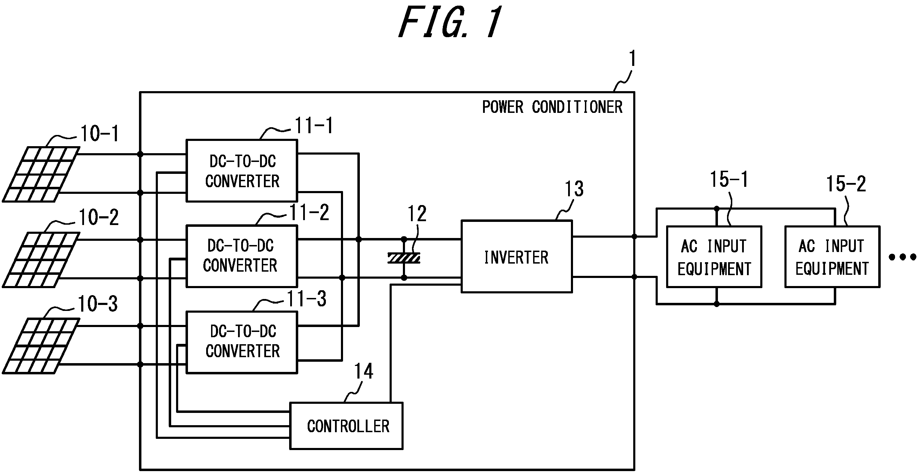

FIG. 1 is a block diagram illustrating a first configuration example of a power conditioner according to an embodiment of the present invention. As illustrated in FIG. 1, a power conditioner 1 includes a plurality of DC-to-DC converters 11 (11-1, 11-2, and 11-3), a DC link capacitor 12, an inverter 13, and a controller 14. Although the output illustrated in FIG. 1 is in the single-phase two-wire form, the output form is not limited to this, and may be, for example, the three-phase form.

The power conditioner 1 of multistring input type has a plurality of input units for DC power from DC input power sources 10. Although this embodiment describes the case where the DC input power sources 10 are each a solar cell string formed by series-connecting a plurality of solar cell modules for converting sunlight into DC power, the DC input power sources 10 are not limited to solar cell strings, and may be dispersed power sources of wind power generation, fuel cells, etc.

Each DC-to-DC converter 11 steps up a voltage input from the connected solar cell string 10, to a constant voltage. Although this embodiment describes the case where the number of DC-to-DC converters 11 is three, the number of DC-to-DC converters 11 may be two or more.

The DC link capacitor 12 smooths the DC voltage stepped up by each DC-to-DC converter 11, to stabilize the input voltage to the inverter 13. A smoothing capacitor may be additionally provided in each DC-to-DC converter 11 to stabilize the output voltage.

The inverter 13 converts the DC voltage smoothed by the DC link capacitor 12, into an AC voltage. In normal time, the inverter 13 is connected to a power grid. In the event of a power failure or the like, the inverter 13 operates autonomously, that is, disconnects from the power grid and independently supplies AC power to AC input equipment 15. FIG. 1 illustrates the connection between the power conditioner 1 and the AC input equipment 15 during autonomous operation.

The controller 14 controls the duty ratios of switching elements in the DC-to-DC converters 11 and the inverter 13, to control the outputs of the DC-to-DC converters 11 and the inverter 13.

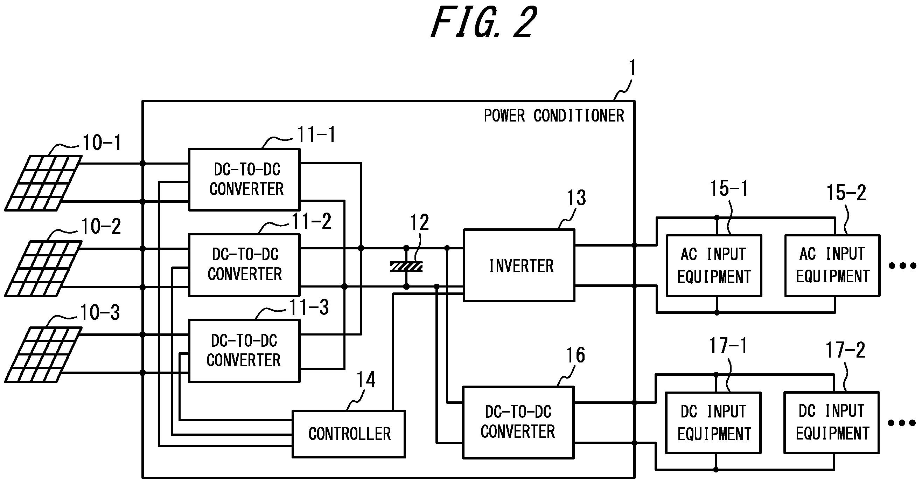

FIG. 2 is a block diagram illustrating a second configuration example of the power conditioner according to the embodiment of the present invention. The power conditioner 1 illustrated in FIG. 2 differs from the power conditioner 1 illustrated in FIG. 1 in that a DC-to-DC converter 16 is further included. The DC-to-DC converter 16 converts the DC voltage smoothed by the DC link capacitor 12 into a predetermined DC voltage, and supplies the DC power to DC input equipment 17 during autonomous operation. The inclusion of the DC-to-DC converter 16 enables direct supply of power to the DC input equipment 17.

Thus, the power conditioner 1 includes a power converter on the output side. The power converter may be only the inverter 13 as illustrated in FIG. 1, or the inverter 13 and the DC-to-DC converter 16 connected in parallel as illustrated in FIG. 2. Although not illustrated, the power converter may be only the DC-to-DC converter 16, or any number of inverters 13 and any number of DC-to-DC converters 16 connected in parallel.

The DC-to-DC converter 16 may be a bidirectional converter, where the same control as the other DC-to-DC converters 11 is applied when the DC-to-DC converter 16 acts as the input side and different control is applied when the DC-to-DC converter 16 acts as the output side. As a specific example, in the case where the input power sources of the power conditioner 1 include a storage battery, the DC-to-DC converter 16 is controlled as the input side or controlled as the output side for charging the storage battery depending on the remaining power of the storage battery.

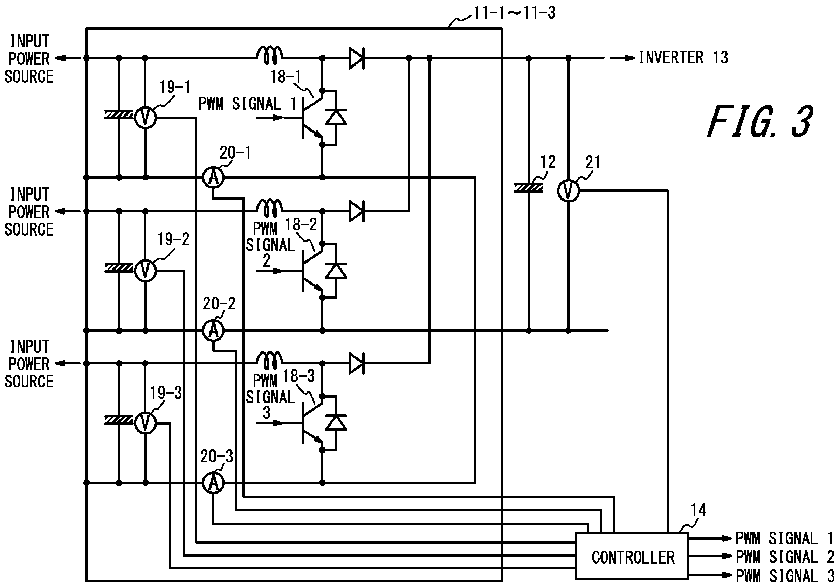

FIG. 3 is a circuit diagram illustrating an example of the DC-to-DC converters 11 in the power conditioner 1. FIG. 3 also illustrates the controller 14 that controls the DC-to-DC converters 11. Although typical non-insulated boost converters are illustrated in FIG. 3, the specific circuit configuration is not limited to this. Any configuration is applicable so long as each DC-to-DC converter 11 is capable of changing the impedance as seen from the input power source and independently controlling the input power to a desired value.

The controller 14 monitors the voltages of the DC-to-DC converters 11 detected by respective input voltage sensors 19 (19-1, 19-2, and 19-3), the input currents of the DC-to-DC converters 11 detected by respective input current sensors 20 (20-1, 20-2, and 20-3), and the input voltage (DC link voltage) of the inverter 13 detected by a DC link voltage sensor 21. Based on the monitored values, the controller 14 generates PWM signals for respective switching elements 18 (18-1, 18-2, and 18-3) in the DC-to-DC converters 11. The control of the DC-to-DC converters 11 will be described in detail later.

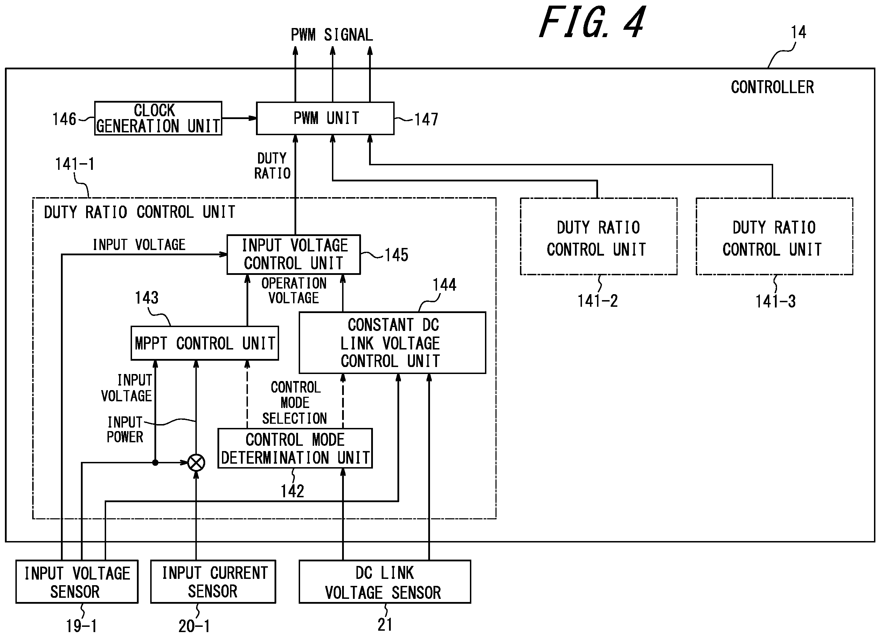

FIG. 4 is a block diagram illustrating the functions of the controller 14 in the power conditioner 1. The operation of the controller 14 is described below, with reference to FIG. 4.

A duty ratio control unit 141-1 controls a duty ratio used for generating the PWM signal for the DC-to-DC converter 11-1. Likewise, a duty ratio control unit 141-2 controls a duty ratio used for generating the PWM signal for the DC-to-DC converter 11-2, and a duty ratio control unit 141-3 controls a duty ratio used for generating the PWM signal for the DC-to-DC converter 11-3. The duty ratio control units 141-2 and 141-3 perform the same control as the duty ratio control unit 141-1 and have the same functional blocks as the duty ratio control unit 141-1, and so their configurations are not illustrated in FIG. 4.

A control mode determination unit 142 determines an MPPT mode as the control mode, during connection to the power grid. During autonomous operation, on the other hand, the control mode determination unit 142 determines one of the MPPT mode and a constant DC link voltage mode as the control mode, according to the DC link voltage detected by the DC link voltage sensor 21. The MPPT mode is a mode in which MPPT control is performed to maximize the output power of the DC input power source. The constant DC link voltage mode is a mode in which the output voltage of the DC-to-DC converter 11 is controlled at a target voltage so that the power consumption of the load and the power generation of the input power sources are equal. When switching the control mode, the control mode determination unit 142 references the immediately preceding operation voltage to smoothly switch the control so that the operation voltage is continuous before and after the switching.

An MPPT control unit 143 monitors the input voltage detected by the input voltage sensor 19 and the input current detected by the input current sensor 20. In the case where the control mode determination unit 142 determines the MPPT mode, the MPPT control unit 143 determines an operation voltage for maximizing the input power to the power conditioner 1. Although the tracking by the input voltage is performed in the example illustrated in FIG. 4, the specific method of MPPT is not limited to this.

A constant DC link voltage control unit 144 determines an operation voltage so that the DC link voltage detected by the DC link voltage sensor 21 is the target voltage, in the case where the control mode determination unit 142 determines the constant DC link voltage mode.

An input voltage control unit 145 compares the input voltage detected by the input voltage sensor 19 and the operation voltage command value determined by the MPPT control unit 143 or the constant DC link voltage control unit 144, and performs feedback control to change the duty ratio so as to reduce the difference to 0. Although the control is performed using the operation voltage of the input power source as the command value in the example illustrated in FIG. 4, the controller 14 may perform any control of switching between the MPPT mode and the constant DC link voltage mode according to the DC link voltage. Hence, the control may be performed using the operation current of the input power source (feedback control by the input current).

A PWM unit 147 compares a reference waveform that is synchronous with a clock generated by a clock generation unit 146 and the duty ratio generated by the input voltage control unit 145, to generate a PWM signal. The PWM unit 147 outputs the PWM signal to the corresponding DC-to-DC converter 11.

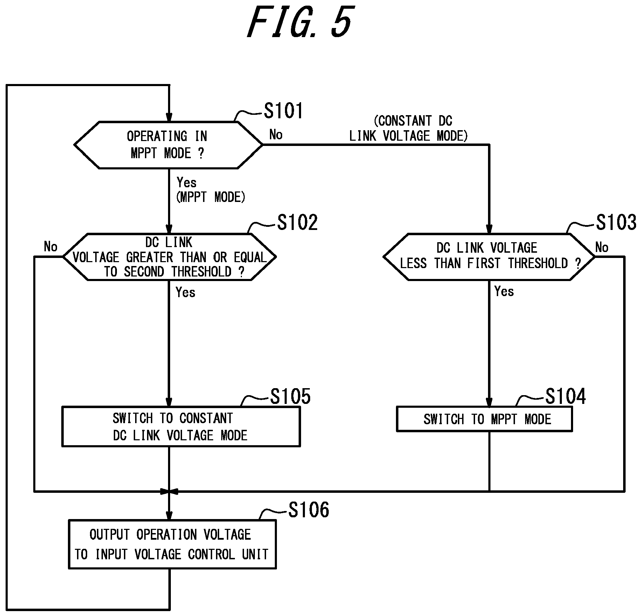

FIG. 5 is a flowchart illustrating the operation of the duty ratio control unit 141 during autonomous operation. The duty ratio control unit 141 knows the current operation mode of the power conditioner 1. In the case where the power conditioner 1 is operating in the constant DC link voltage mode (step S101: No), the control mode determination unit 142 determines whether or not the DC link voltage acquired by the DC link voltage sensor 21 is less than a first threshold (step S103). While the DC link voltage is not less than the first threshold (step S103: No), the control mode determination unit 142 maintains the constant DC link voltage mode (step S105). The constant DC link voltage control unit 144 determines the operation voltage, and outputs the operation voltage to the input voltage control unit 145 (step S106). When the DC link voltage decreases to less than the first threshold (step S103: Yes), the control mode determination unit 142 switches the operation mode to the MPPT mode (step S104). The MPPT control unit 143 determines the operation voltage, and outputs the operation voltage to the input voltage control unit 145 (step S106).

In the case where the power conditioner 1 is operating in the MPPT mode (step S101: Yes), on the other hand, the control mode determination unit 142 determines whether or not the DC link voltage acquired by the DC link voltage sensor 21 is greater than or equal to a second threshold (step S102). While the DC link voltage is less than the second threshold (step S102: No), the control mode determination unit 142 maintains the MPPT mode (step S104). The MPPT control unit 143 determines the operation voltage, and outputs the operation voltage to the input voltage control unit 145 (step S106). When the DC link voltage increases to greater than or equal to the second threshold (step S102: Yes), the control mode determination unit 142 switches the operation mode to the constant DC link voltage mode (step S105). The constant DC link voltage control unit 144 determines the operation voltage, and outputs the operation voltage to the input voltage control unit 145 (step S106).

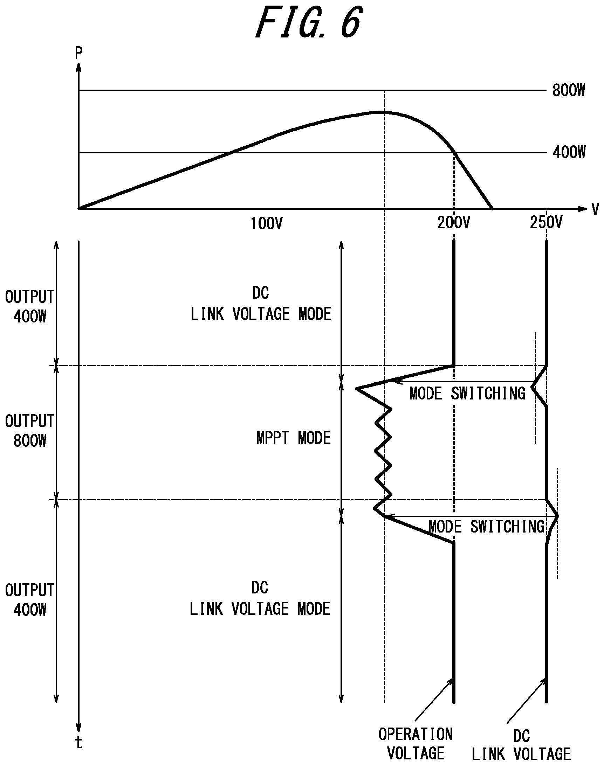

FIG. 6 is a diagram illustrating a control example during autonomous operation with regard to one DC-to-DC converter 11. The upper part of FIG. 6 illustrates the PV property of the solar cells (input power source). During autonomous operation, in the case where the power consumption of the load is 400 W and the maximum power generation of the connected DC input power source 10 is greater than or equal to 400 W, the power conditioner 1 operates in the constant DC link voltage mode. According to the PV property, the voltage corresponding to the input power of 400 W is 200 V. Hence, the operation voltage is controlled at 200 V in the constant DC link voltage mode.

Suppose the power consumption of the load then increases from 400 W to 800 W. Since the output power is greater than the input power, the DC link voltage decreases. The control mode determination unit 142 monitors the DC link voltage. In the case where the DC link voltage decreases to less than the first threshold, the control mode determination unit 142 switches the operation mode from the constant DC link voltage mode to the MPPT mode. As a result of switching to the MPPT mode, the maximum power can be obtained from the DC input power source 10. Note that, in the example illustrated in FIG. 6, the maximum power of the DC input power source 10 is less than 800 W, and another DC input power source 10 makes up for the shortage of power.

Suppose the power consumption of the load then decreases from 800 W to 400 W. Since the input power is greater than the output power, the DC link voltage increases. The control mode determination unit 142 monitors the DC link voltage. In the case where the DC link voltage increases to greater than or equal to the second threshold, the control mode determination unit 142 switches the operation mode from the MPPT mode to the constant DC link voltage mode.

The switching from the constant DC link voltage mode to the MPPT mode is preferably performed at a different timing for each DC-to-DC converter 11. Accordingly, the first threshold for determining whether or not to switch from the constant DC link voltage mode to the MPPT mode is made different for each DC-to-DC converter 11. This method is hereafter referred to as a first switching timing adjustment method, and it is not part of the claimed invention. As an alternative, while the first threshold is common to the DC-to-DC converters 11, the time from when the DC link voltage decreases to less than the first threshold to when the switching to the MPPT mode is performed may be made different for each DC-to-DC converter 11. This method is hereafter referred to as a second switching timing adjustment method, and it is not part of the claimed invention. As another alternative, the target voltage in the constant DC link voltage mode may be made different for each DC-to-DC converter 11. This method is hereafter referred to as a third switching timing adjustment method, and this method is part of the claimed invention.

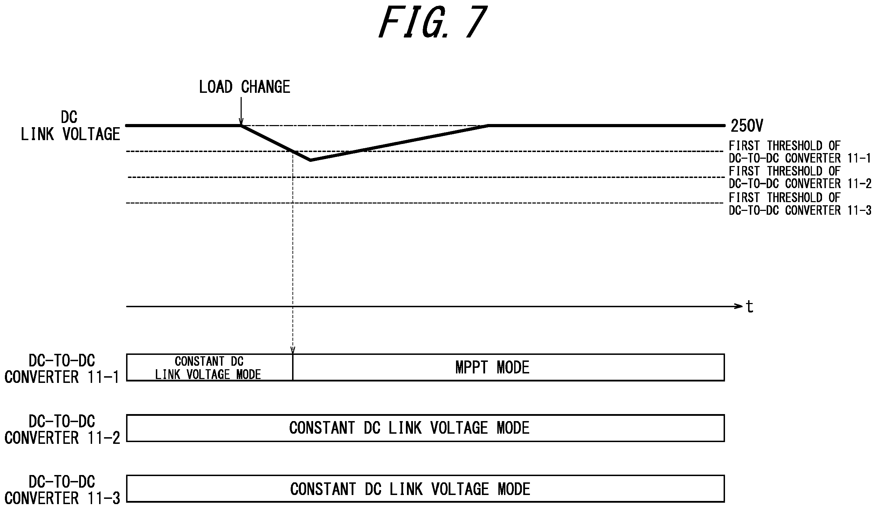

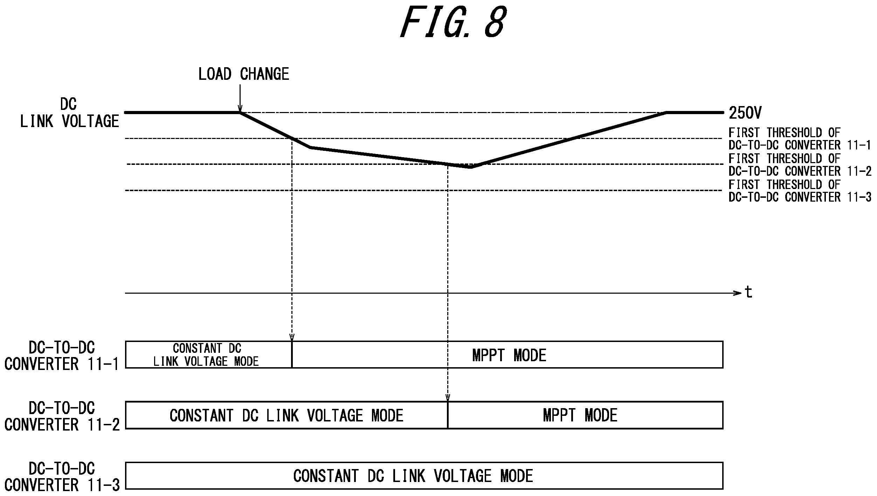

FIGS. 7 and 8 are diagrams each illustrating an example of controlling the power conditioner 1 during autonomous operation according to the first switching timing adjustment method. Suppose (the first threshold of the DC-to-DC converter 11-1) > (the first threshold of the DC-to-DC converter 11-2) > (the first threshold of the DC-to-DC converter 11-3). The DC-to-DC converters 11-1, 11-2, and 11-3 switch from the constant DC link voltage mode to the MPPT mode in this order.

In the example illustrated in FIG. 7, at first the DC-to-DC converters 11-1, 11-2, and 11-3 are all operating in the constant DC link voltage mode, and the power consumption of the load and the power generation of the DC input power sources 10 are equal. Subsequently, when the power consumption of the load increases, the DC link voltage decreases. When the DC link voltage decreases to less than the first threshold of the DC-to-DC converter 11-1, the operation mode of the DC-to-DC converter 11-1 is switched from the constant DC link voltage mode to the MPPT mode. As a result of the DC-to-DC converter 11-1 operating in the MPPT mode, the power generation of the DC input power sources 10 increases. Once the DC input power sources 10 have become able to generate power equal to the power consumption of the load, the DC link voltage increases and eventually reaches a constant value.

In the example illustrated in FIG. 8, (the first threshold of the DC-to-DC converter 11-1) > (the first threshold of the DC-to-DC converter 11-2) > (the first threshold of the DC-to-DC converter 11-3), as in FIG. 7. At first, the DC-to-DC converters 11-1, 11-2, and 11-3 are all operating in the constant DC link voltage mode, and the power consumption of the load and the power generation of the DC input power sources 10 are equal. Subsequently, when the power consumption of the load increases, the DC link voltage decreases. In the example illustrated in FIG. 8, the increase of the power consumption of the load is larger than that in the example illustrated in FIG. 7.

When the DC link voltage decreases to less than the first threshold of the DC-to-DC converter 11-1, the operation mode of the DC-to-DC converter 11-1 is switched from the constant DC link voltage mode to the MPPT mode. In the case where, even when the power generation of the DC input power sources 10 increases as a result of the DC-to-DC converter 11-1 operating in the MPPT mode, the DC input power sources 10 are still unable to generate power equal to the power consumption of the load, the DC link voltage further decreases as illustrated in FIG. 8. When the DC link voltage decreases to less than the first threshold of the DC-to-DC converter 11-2, the operation mode of the DC-to-DC converter 11-2 is switched from the constant DC link voltage mode to the MPPT mode, too. Once the DC input power sources 10 have become able to generate power equal to the power consumption of the load as a result of the DC-to-DC converters 11-1 and 11-2 operating in the MPPT mode, the DC link voltage increases and eventually reaches a constant value.

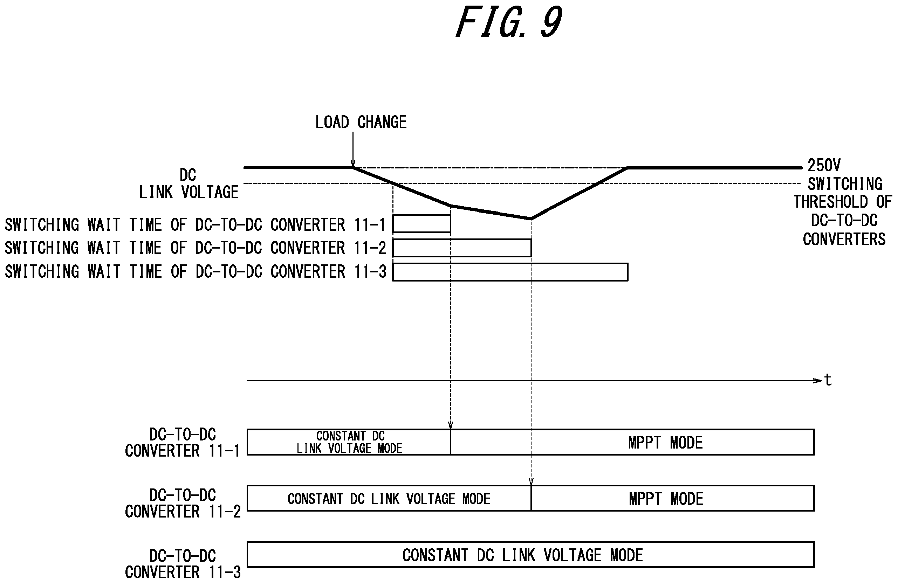

FIG. 9 is a diagram illustrating an example of controlling the power conditioner 1 during autonomous operation according to the second switching timing adjustment method. In the example illustrated in FIG. 9, the first threshold is common to the DC-to-DC converters 11, and the switching wait time from when the DC link voltage decreases to less than the first threshold to when the switching to the MPPT mode is performed is set to increase in the order of the DC-to-DC converters 11-1, 11-2, and 11-3.

In FIG. 9, too, at first the DC-to-DC converters 11-1, 11-2, and 11-3 are all operating in the constant DC link voltage mode, and the power consumption of the load and the power generation of the DC input power sources 10 are equal. Subsequently, when the power consumption of the load increases, the DC link voltage decreases. When the DC link voltage decreases to less than the first threshold of the DC-to-DC converters 11, each DC-to-DC converter 11 remains in the constant DC link voltage mode until the predetermined switching wait time of the DC-to-DC converter 11 elapses.

In the example illustrated in FIG. 9, after the predetermined switching wait time of the DC-to-DC converter 11-1 has elapsed, the DC link voltage is less than the first threshold. The operation mode of the DC-to-DC converter 11-1 is accordingly switched from the constant DC link voltage mode to the MPPT mode. After the predetermined switching wait time of the DC-to-DC converter 11-2 has elapsed, the DC link voltage is still less than the first threshold. The operation mode of the DC-to-DC converter 11-2 is accordingly switched from the constant DC link voltage mode to the MPPT mode, too. Once the DC input power sources 10 have become able to generate power equal to the power consumption of the load as a result of the DC-to-DC converters 11-1 and 11-2 operating in the MPPT mode, the DC link voltage increases and eventually reaches a constant value. After the predetermined switching wait time of the DC-to-DC converter 11-3 has elapsed, the DC link voltage is not less than the first threshold. The operation mode of the DC-to-DC converter 11-3 is accordingly kept at the constant DC link voltage mode.

Although an example of controlling the power conditioner 1 during autonomous operation according to the third switching timing adjustment method is not illustrated, for example the control may be performed as follows. The target voltage of the DC-to-DC converter 11-1 in the constant DC link voltage mode is set to 250 V, the target voltage of the DC-to-DC converter 11-2 in the constant DC link voltage mode is set to 249 V, and the target voltage of the DC-to-DC converter 11-3 in the constant DC link voltage mode is set to 248 V. Thus, the timing of switching from the constant DC link voltage mode to the MPPT mode can be made different for each DC-to-DC converter 11, in the same way as above. In such a case, the operation mode of the DC-to-DC converter may be switched from the constant DC link voltage mode to the MPPT mode when the output of another DC-to-DC converter having a lower target voltage than the DC-to-DC converter exceeds predetermined power.

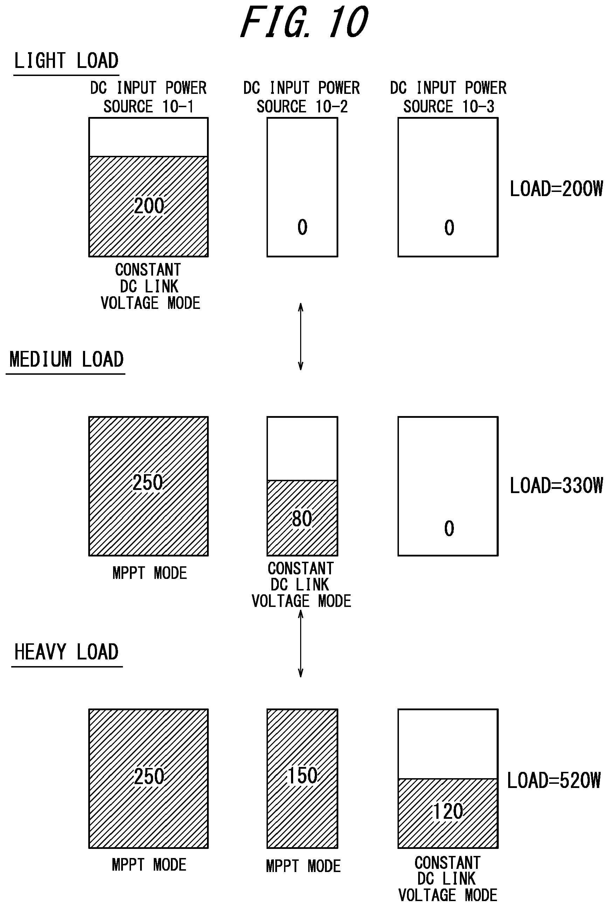

FIG. 10 is a diagram illustrating the power generation of each DC input power source 10 during autonomous operation. In the example illustrated in FIG. 10, the maximum power generation of the DC input power source 10-1 is 250 W, the maximum power generation of the DC input power source 10-2 is 150 W, and the maximum power generation of the DC input power source 10-3 is 200 W. In the case where the power consumption of the load is 200 W, the DC-to-DC converter 11-1 operates in the constant DC link voltage mode to generate 200 W from the DC input power source 10-1. Meanwhile, the DC input power sources 10-2 and 10-3 do not generate power.

In the case where the power consumption of the load increases to 330 W, the DC-to-DC converter 11-1 switches from the constant DC link voltage mode to the MPPT mode to generate 250 W from the DC input power source 10-1, according to the above-mentioned adjustment method. For the remaining 80 W, the DC-to-DC converter 11-2 operates in the constant DC link voltage mode to generate 80 W from the DC input power source 10-2. Meanwhile, the DC input power source 10-3 does not generate power.

In the case where the power consumption of the load increases to 520 W, the DC-to-DC converter 11-2 also switches from the constant DC link voltage mode to the MPPT mode to generate 150 W from the DC input power source 10-2, according to the above-mentioned adjustment method. For the remaining 120 W, the DC-to-DC converter 11-3 operates in the constant DC link voltage mode to generate 120 W from the DC input power source 10-3.

Thus, in the power conditioner 1 according to the present invention, during autonomous operation, each DC-to-DC converter 11 individually switches between the constant DC link voltage mode in which the output voltage of the DC-to-DC converter 11 is controlled at the target voltage and the MPPT mode in which control is performed to maximize the output power of the DC input power source 10, according to the change of the DC link voltage (the input voltage of the power converter 13, 16).

If all DC-to-DC converters 11 switch to the MPPT mode during autonomous operation, the balance between the power consumption of the load and the power generation of the DC input power sources 10 is lost. Conversely, if all DC-to-DC converters 11 remain in the constant DC link voltage mode during autonomous operation, no DC input power source 10 can generate the maximum power. In the case where one DC input power source 10 exceeds the maximum power point in an attempt to track the power consumption of the load, the power generation of the DC input power source 10 decreases. This leads to a chain reaction where another DC input power source 10 exceeds the maximum power point. There is a risk that the system eventually stops due to insufficient power generation.

According to the present invention, however, the power generation of the DC input power sources 10 can be adjusted according to the power consumption of the load in such a manner that a DC-to-DC converter 11 operates in the MPPT mode to cause the DC input power source 10 connected with the DC-to-DC converter 11 to generate the maximum power while another DC-to-DC converter 11 operates in the constant DC link voltage mode. This enables efficient and stable use of generated power. Moreover, a load with high power consumption can be operated during autonomous operation, as compared with the case where conventional control is performed.

Although the embodiment has been described above as a representative example, it should be obvious to those skilled in the art that many changes and substitutions may be made to the embodiment described above within the scope of the present invention. Therefore, the embodiment described above should not be construed as limiting the present invention, and various modifications and changes are possible without departing from the scope of the claims.

### REFERENCE SIGNS LIST

- 1: power conditioner
- 10: DC input power source (solar cell string)
- 11: DC-to-DC converter
- 12: DC link capacitor
- 13: inverter
- 14: controller
- 15: AC input equipment
- 16: DC-to-DC converter
- 17: DC input equipment
- 18: switching element
- 19: input voltage sensor
- 20: input current sensor
- 21: DC link voltage sensor
- 141: duty ratio control unit
- 142: control mode determination unit
- 143: MPPT control unit
- 144: constant DC link voltage control unit
- 145: input voltage control unit
- 146: clock generation unit
- 147: PWM unit

## Claims

1. A power conditioner (1) connectable to a power grid, the power conditioner (1) comprising: a plurality of DC-to-DC converters (11) that convert voltages of respective DC input power sources (10); and a power converter (13) connected to the outputs of the plurality of DC-to-DC converters (11); and a voltage detector (21) for detecting the input voltage of the power converter (13), **characterized in that**
during autonomous operation in which the power conditioner (1) is disconnected from the power grid and allowed to independently supply power to a load, each of the DC-to-DC converters (11) is configured to individually switch to an MPPT mode in which control is performed to maximize output power of a corresponding DC input power source (10) in the case where the input voltage of the power converter (13) decreases to less than a first threshold, and to switch to a constant DC link voltage mode in which an output voltage of the DC-to-DC converter is controlled at a target voltage in the case where the input voltage of the power converter (13) increases to greater than or equal to a second threshold, wherein the target voltage in the constant DC link voltage mode is different for each of the DC-to-DC converters (11).

2. The power conditioner according to claim 1,
wherein the power converter (13) includes a bidirectional converter.

3. A method of controlling a power conditioner (1) connectable to a power grid, wherein the power conditioner (1) includes: a plurality of DC-to-DC converters (11) that convert voltages of respective DC input power sources (10); a power converter (13) connected to the outputs of the plurality of DC-to-DC converters (11); and a voltage detector (21) for detecting the input voltage of the power converter (13), **characterized in that**
the method comprising a step of during autonomous operation in which the power conditioner is disconnected from the power grid and allowed to independently supply power to a load, switching each of the DC-to-DC converters (11) individually to an MPPT mode in which control is performed to maximize output power of a corresponding DC input power source (10) in the case where the input voltage of the power converter (13) decreases to less than a first threshold, and switching each of the DC-to-DC converters (11) individually to a constant DC link voltage mode in which an output voltage of the DC-to-DC converter is controlled at a target voltage in the case where the input voltage of the power converter (13) increases to greater than or equal to a second threshold, wherein the target voltage in the constant DC link voltage mode is different for each of the DC-to-DC converters (11).

## Patentansprüche

1. Leistungskonditionierer (1), der mit einem Stromnetz verbunden werden kann, wobei der Leistungskonditionierer (1) enthält: eine Mehrzahl Gleichstrom-zu-Gleichstrom-Wandler (11), die Spannungen jeweiliger Gleichstromeingabestromquellen (10) umwandeln; und einen Leistungswandler (13), der mit den Ausgaben der Mehrzahl Gleichstrom-zu-Gleichstrom-Wandler (11) verbunden ist; und einen Spannungsdetektor (21) zum Detektieren der Eingabespannung des Leistungswandlers (13), **dadurch gekennzeichnet, dass**
während autonomen Betriebs, in dem der Leistungskonditionierer (1) von dem Stromnetz getrennt ist und es ihm erlaubt ist einer Last unabhängig Strom zuzuführen, jeder der Gleichstrom-zu-Gleichstrom-Wandler (11) eingerichtet ist, individuell in einen MPPT-Modus zu schalten, in dem eine Steuerung durchgeführt wird, um die ausgegebene Leistung einer entsprechenden Gleichstromeingabestromquelle (10) in dem Fall zu maximieren, in dem die Eingabespannung des Leistungswandlers (13) sich auf weniger als einen ersten Schwellwert verringert, und in einen konstanten Gleichstromverbindungsspannungsmodus zu schalten, in dem eine Ausgabespannung des Gleichstrom-zu-Gleichstrom-Wandlers auf eine Zielspannung in dem Fall gesteuert wird, dass die Eingabespannung des Leistungswandlers (13) auf mehr als einen zweiten Schwellwert oder auf gleich dem zweiten Schwellwert zunimmt, wobei die Zielspannung in dem konstanten Gleichstromverbindungsspannungsmodus sich für jeden der Gleichstrom-zu-Gleichstrom-Wandler (11) unterscheidet.

2. Leistungskonditionierer gemäß Anspruch 1,
bei dem der Leistungswandler (13) einen bidirektionalen Wandler enthält.

3. Verfahren zum Steuern eines Leistungskonditionierers (1) der mit einem Stromnetz verbunden werden kann, wobei der Leistungskonditionierer (1) enthält: eine Mehrzahl Gleichstrom-zu-Gleichstromwandler (11), die Spannungen jeweiliger Gleichstromeingabestromquellen (10) umwandeln; einen Leistungswandler (13), der mit den Ausgaben der Mehrzahl Gleichstrom-zu-Gleichstrom-Wandler (11) verbunden ist; und einen Spannungsdetektor (21) zum Detektieren der Eingabespannung des Leistungswandlers (13), **dadurch gekennzeichnet, dass**
das Verfahren einen Schritt enthält, demzufolge während autonomen Betriebs, in dem der Leistungskonditionierer von dem Stromnetz getrennt ist und es ihm erlaubt ist, unabhängig Strom zu einer Last zuzuführen, jeder der Gleichstrom-zu-Gleichstrom-Wandler (11) individuell in eine NPPT-Modus geschaltet wird, in dem eine Steuerung durchgeführt wird, um die Ausgabeleistung einer entsprechenden Gleichstromeingabestromquelle (10) in dem Fall zu maximieren, in dem die Eingabespannung des Leistungswandlers (13) auf weniger als einen ersten Schwellwert abnimmt, und jeder der Gleichstrom-zu-Gleichstrom-Wandler (11) individuell in einen konstanten Gleichstromverbindungsspannungsmodus geschaltet wird, in dem eine Ausgabespannung der Gleichstrom-zu-Gleichstrom-Wandler auf eine Zielspannung in dem Fall gesteuert wird, in dem die Eingabespannung des Leistungswandlers (13) auf mehr als einen zweiten Schwellwert oder auf gleich dem zweiten Schwellwert zunimmt, wobei die Zielspannung in dem konstanten Gleichstromverbindungsspannungsmodus sich für jeden der Gleichstrom-zu-Gleichstrom-Wandler (11) unterscheidet.

## Revendications

1. Conditionneur de puissance (1) connectable à un réseau électrique, le conditionneur de puissance (1) comprenant : une pluralité de convertisseurs CC-CC(11) qui convertissent des tensions de sources de puissance d'entrée CC respectives (10) ; et un convertisseur de puissance (13) connecté aux sorties de la pluralité de convertisseurs CC-CC (11) ; et un détecteur de tension (21) pour détecter la tension d'entrée du convertisseur de puissance (13), **caractérisé en ce que**
durant un fonctionnement autonome dans lequel le conditionneur de puissance (1) est déconnecté du réseau électrique et permis de fournir indépendamment une puissance à une charge, chacun des convertisseurs CC-CC (11) est configuré pour, individuellement, commuter à un mode MPPT dans lequel une commande est réalisée pour maximiser une puissance de sortie d'une source de puissance d'entrée CC correspondante (10) au cas où la tension d'entrée du convertisseur de puissance (13) diminue jusqu'à un niveau inférieur à un premier seuil, et pour commuter à un mode à tension de liaison CC constante dans lequel une tension de sortie du convertisseur CC-CC est commandée à une tension cible au cas où la tension d'entrée du convertisseur de puissance (13) augmente jusqu'à un niveau supérieur ou égal à un second seuil, dans lequel la tension cible dans le mode à tension de liaison CC constante est différente pour chacun des convertisseurs CC-CC (11).

2. Conditionneur de puissance selon la revendication 1,
dans lequel le convertisseur de puissance (13) inclut un convertisseur bidirectionnel.

3. Procédé de commande d'un conditionneur de puissance (1) connectable à un réseau électrique,
dans lequel le conditionneur de puissance (1) inclut : une pluralité de convertisseurs CC-CC (11) qui convertissent des tensions de sources de puissance d'entrée CC respectives (10) ; un convertisseur de puissance (13) connecté aux sorties de la pluralité de convertisseurs CC-CC (11) ; et un détecteur de tension (21) pour détecter la tension d'entrée du convertisseur de puissance (13), **caractérisé en ce que** le procédé comprenant une étape de, durant un fonctionnement autonome dans lequel le conditionneur de puissance est déconnecté du réseau électrique et permis de fournir indépendamment une puissance à une charge, la commutation de chacun des convertisseurs CC-CC (11) individuellement à un mode MPPT dans lequel une commande est réalisée pour maximiser une puissance de sortie d'une source de puissance d'entrée CC correspondante (10) au cas où la tension d'entrée du convertisseur de puissance (13) diminue jusqu'à un niveau inférieur à un premier seuil, et la commutation de chacun des convertisseurs CC-CC (11), individuellement, à un mode à tension de liaison CC constante dans lequel une tension de sortie du convertisseur CC-CC est commandée à une tension cible au cas où la tension d'entrée du convertisseur de puissance (13) augmente jusqu'à un niveau supérieur ou égal à un second seuil, dans lequel la tension cible dans le mode à tension de liaison CC constante est différente pour chacun des convertisseurs CC-CC (11).
